# EUROPEAN PATENT SPECIFICATION

(11) **EP 1 227 689 B1**
(45) Date of publication and mention of the grant of the patent: **17.08.2005**
(21) Application number: 01102072.4
(22) Date of filing: 30.01.2001
(51) Int. Cl.: H04Q 7/22

(54) **Entry gateway service**
Eingangsgatewaydienst
Service d'une passerelle d'entrée

(43) Date of publication of application: 31.07.2002
(60) Divisional application: 05000691.5
(73) Proprietor: Sony International (Europe) GmbH, 10785 Berlin (DE)
(72) Inventor: Mandato, Davide, Adv. Tech. Center Stuttgart, 70327 Stuttgart (DE); Kovacs, Ernö, Adv. Tech. Center Stuttgart, 70327 Stuttgart (DE)
(74) Representative: Rupp, Christian, Dipl.Phys.

(56) References cited:
- WO-A-00/65465
- CZERWINSKI S E ET AL: "AN ARCHITECTURE FOR A SECURE SERVICE DISCOVERY SERVICE" SEATTLE, WA, AUG. 15 - 20, 1999,NEW YORK, NY: ACM,US, vol. CONF. 5, 15 August 1999 (1999-08-15), pages 24-35, XP000896069 ISBN: 1-58113-142-9

## Description

The present invention relates to a method for supporting wireless mobile devices in discovering local services of a network, to a computer software program product as well as to a system of entry gateway servers offering information on local service of a network and their surroundings to wired and/or wireless mobile device connecting thereto.

The general background of the present invention is the field of mobile computing and more specifically location-dependent computing, wireless networking, ad-hoc computing, personalised services and so-called entry gateway services (EGS).

The growing availability of wireless networks allows users to access network-based resources from nearly everywhere in the world. The connectivity provided mainly by the Internet, but also by other computer networks, allows a location transparent access to electronic services all over the network.

"Service" is defined in the following as a functionality available through the use of a network. In this sense any specialised hardware resource that offers a function over the network is considered a service. Also any software component running on a general purpose computer is also considered a service. Even a specialised multimedia communication using special transport protocols is considered a service because the functionality is provided through the use of the network although the functionality is accessed locally.

Particularly when the user is moving between different places, the capability to immediately utilise the available services can provide the user with a new degree of support from the global networks. A special case is the automatic selection and use of such local services, e.g. for gaining the attention of the user.

Location-dependent services are known from the prior art in form from several combined Technologies:

Position determination devices allow locating the geographic position of mobile devices. Available devices range from GPS-based satellite receivers over movement sensors to network-based triangulation.

Local (ad-hoc) networks allow direct (and usually inexpensive) access to networks. Using these networks, users can access (electronic) services available in their surroundings. The locality of the network and its short range is now of advantage, as the services offered will be in close proximity to the user.

Mobile multimedia middleware allows to access networked multimedia services regardless of the available networks, the available Quality of Service (QoS) and the used terminal. The Wireless Application Protocol (WAP) shows the capability of mobile multimedia middleware to access services over the GSM network.

With a wide-spread installation of local (wireless) networks in public and private locations the mobile user can gain access to services in her/his immediate vicinity. This leads to the problem that he needs support in getting access to the available services.
Research in the area of ad-hoc computing has shown that support must be given on several levels of the system:
- Ad-hoc Networking:
   The ability to immediately integrate a mobile device into a network,
- Ad-hoc Services:
   The ability to immediately access services which includes service discovery, service selection, service access and service subscription,
- Ad-hoc Customisation:
   The ability to immediately customise a service to the needs of the user involving the fast, probably automatic customisation of a service subscription, resource reservation and personalisation of the service.

The disadvantage of the solutions proposed in the prior art is that they assume a mobile device, which will independently attach itself to the network, find the required services and explore their capabilities. As this involves several communication and processing steps, it might take long, occupies the device and consumes a lot of battery power.

The principles of an ad-hoc computing manager (ACM) is shown in EP 11 075 12 A1.

From the article "An Architecture for a Secure Service Discovery Service" by Czerwinski et al, 15 August 1999, the architecture and implementation of a Service Discovery Service (SDS) is known. The SDS system is composed of three main components that are clients, services, and servers. The SSD servers enable clients to discover the remote services running in a network by soliciting information from the services and then using it to fulfill client queries. Once an SDS server has established its own domain, it begins to cache service descriptions which are advertised in the respective domain. The SDS server does this by decrypting incoming service announcements with the aid of a protocol providing service description privacy and authentication. After that, the SDS server adds the description to its data base and updates the time stamp of the description.

In view of the above it is the object of the present invention to provide for a technique improving the support of wireless mobile devices in discovering local services of a computer network.

This object is achieved by means of the features of the independent claims. The dependent claims develop further the central idea of the present invention.

According to the present invention therefore a method performed in a mobile device to discover and use local services offered in a coverage area of a wired or wireless communication system served by an Entry Gateway Server is proposed. A description of a required service is sent from the mobile device to the Entry Gateway Server when entering the coverage area. The Entry Gateway Server pre-configures a service template describing a way of using the required service and delivers the service template to the mobile device. The mobile device then accesses and uses the required service in a way as specified in the received service template. Thereby, the service template is customized by the user of the mobile device. The customized service template is stored in a database. Finally, the customized service template is delivered from the Entry Gateway Server to the mobile device when the mobile device re-enters the coverage area.

The entry gateway server can check the availability of services and whether resources are already reserved for other tasks before offering them to the wireless mobile device accessing the corresponding entry gateway service.

The entry gateway server can validate whether the local service template matches the requirements of the mobile device before offering them to the wireless mobile device.

The entry gateway server can continuously or periodically monitor the current state of local services in its surroundings.

Users of mobile devices can store personal settings for the location of an entry gateway server of the entry gateway service.

On the request of a user of a mobile device the entry gateway server can access a database containing information on local services.

The database can contain information on single services, and/or services templates describing a way of using a single service or a set of services.

On request of a user of a mobile device the entry gateway server can scan the network for the requested local service.

Mobile devices can automatically scan for a new entry gateway servers in their surroundings.

Mobile devices can scan automatically for new entry gateway servers after each geographical change of the mobile device.

Mobile devices can scan for new entry gateway servers on request of their user.

According to a further aspect a computer software program product is proposed implementing a method as set forth above when run on a server of a computer network and a mobile device, respectively.

According to a still further aspect of the present invention a system for a mobile device to discover and use local services offered in a coverage area of a wired or wireless communication system served by an Entry Gateway Server is proposed. The system comprises an Entry Gateway Server for pre-configuring a service template describing a way of using the required service, and for delivering the service template to the mobile device. Another element of the proposed system is a mobile device for sending a description of a required service to the Entry Gateway Server when entering the coverage area, and for accessing and using the required service in a way as specified in the received service template. Thereby, means are provided for the user of the mobile device to customize the service template. The Entry Gateway Server comprises a database for storing the customized service template and means for delivering the customized service template to the mobile device when the mobile device re-enters the coverage area.

The entry gateway server can be designed to check the availability of services and whether resources for those services are already reserved for other tasks before offering them to the wired and/or wireless mobile device.

The Entry Gateway Server can be designed to validate whether a service template matches the requirements of the mobile device before delivering the service template to the mobile device.

The Entry Gateway Server can be designed to continuously or periodically monitor the current state of local services in its surroundings.

A plurality of entry gateway servers can offer information on local services of a network in an associated area to wireless mobile devices connecting thereto. The entry gateway servers can thereby be organised in a hierarchy wherein lower level entry gateway servers cover a small (geographical or logical) area and higher level entry gateway server connected (directly or indirectly) to the lower level entry gateway servers cover a larger area.

Each entry gateway server but the server on the top level references to the server immediately above it in the hierarchy and to the server immediately below it in the hierarchy.

Further aspects, advantages and features of the present invention will become evident for the man skilled in the art when reading the following detailed description of an embodiment of the present invention taken in conjunction with the figures of the enclosed drawings.
Fig. 1 shows an overview over an entry gateway service (EGS),
fig. 2 shows a possible hierarchy of entry gateway service servers (EGSS),
fig. 3 shows a use case diagram of the entry gateway service,
fig. 4 shows an example for an architecture of an entry gateway service server,

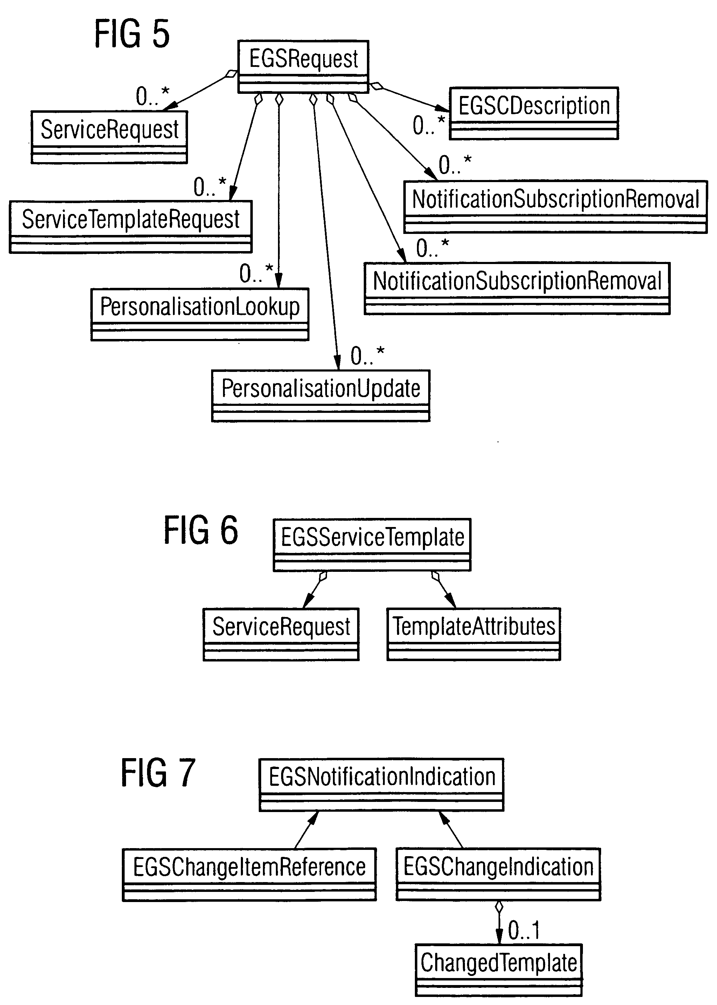

fig. 5 shows an EGS request (UML notation),
fig. 6 shows an example for an EGS service template, and
fig. 7 shows an example for a different EGS notifications.

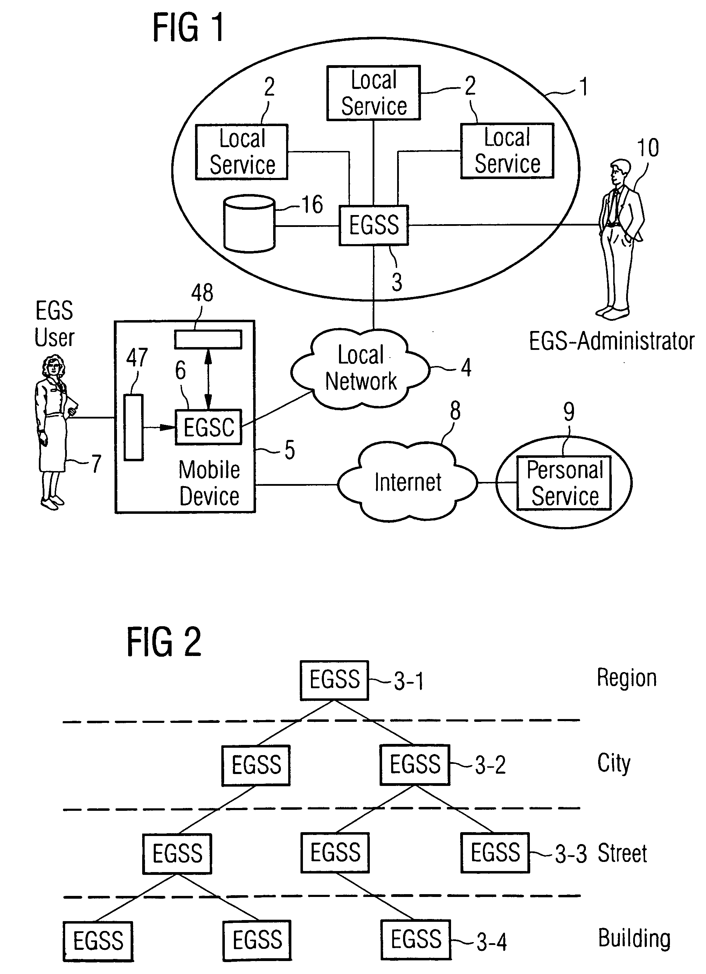

With reference to fig. 1 at first generally an entry gateway service (EGS) will be explained. An entry gateway service server (EGSS) 3 is part of a network 1 offering different local services 2 to users 7 of mobile devices 5. Furthermore, the EGSS 3 can be connected to a database 16. Obviously the database 16 can also be part of the EGSS 3. An EGS administrator 10 has access to the EGSS 3. A user 7 of a mobile device 5 can access the EGSS 3 by means of a local (wireless) network 4 (or of public networks, like e.g. UMTS). Thereto an entry gateway service client (EGSC) 6 is running on the mobile device 5. In addition the mobile device 5 can use for example an Internet connection 8 to access other services such as personal services 9.

The mobile device 5 furthermore comprises a EGSC API (Application Programming Interface) unit 47 to access the EGS client 6. The EGS client 6 uses a EGS discovery unit 48 to find the address of the local EGS server unit 3.

As it has already been said in the introductory portion, it is part of the present invention to support a user 7 of a mobile device 5 through network services that are easy to discover and which can handle ad-hoc computing tasks for the user 7. The support service is the entry gateway service (EGS) responsible for a logical or geographical area, the so-called EGS cell 1. A mobile device 5 on behalf of the mobile user 7 can communicate with the EGS service of the EGS cell 1 the user is presently located in. This can be done automatically or upon direct command and control of the EGS users 7. The main task of the EGS is to store and make public information about available local services 2 for a specific location, i.e. on a location of the corresponding EGS cell 1. Furthermore, the EGS can store pre-defined and optimised templates that describe a way to access the local services 2. By retrieving a template the user 7 will immediately get access to a whole set of already customised services.

Before delivering the template to the mobile user 7, the EGS can do several steps:
- At first it can ensure that the described combination of services are valid (checking phase). This includes that the mentioned services are available and the required resources are not reserved for other tasks. In this case the validation might include data provided by the EGS client 6 running on the mobile device 5 of the EGS user 7.
- Secondly, it will make sure that the template will fit to the requirements stated by the mobile device 5 (validation phase). This can reduce possible mismatches between the mobile device 5 configuration and the location specific services 2.

A second task of the EGS is to constantly monitor the current state of the networked resources available in the surrounding of the EGSS 3, so as to maintain published service templates validity. EGS users 7 may subscribe to changes in the set of available services and will then receive notifications.

In a further step, the EGS services can offer mobile users the possibility to store personal settings (e.g. parameters describing further customisation steps the user might have performed in the given location) for example in the database 16. This enables the user 7 to access a personalised set of services. It will further allow the system to inform the users about changes between different visits to the location of the EGSS 3 in the EGS cell 1.

The EGS system is made available and managed by a service provider that provides local services 2 to (mobile) users 7. In some systems there might be a split between the EGS service provider and the provider of the local services. EGS users 7 can thus exploit the EGS system for discovering local services and obtaining templates that describe possible service usage.

The system is a dedicated and specialised directory service. It does not provide a general directory service. It is also not a general-purpose service discovery service, as it is tailored to provide discovery of local services an templates to access the service. Furthermore, it provides pre-assembled and configured service templates, thus going beyond the normal service lookup.

The EGS system might provide its service to all users or only through EGS service subscribers. Security mechanism enforce the desired access policy. Furthermore, the set of users can be split into for example premium customers and normal customers, wherein premium customers might receive special services. Authorised personnel (such as the EGS administrator 10) can have the authority to manipulate the stored service templates.

The invention comprises a device called EGS server (EGSS) 3 providing the EGS services. It can be integrated into communication networks to support ad-hoc access to services. More specifically, the device will provide pre-defined templates of services that can be immediately used by a mobile device 5 that discovers the EGS service.

As it is shown in fig. 2, a hierarchy of EGS servers, i.e. EGS servers 3-1, 3-2, 3-3 and 3-4 arranged in different hierarchical levels can be provided. As EGS servers 3 generally are only responsible for a limited area, a hierarchical set of EGSS 3 can be built, wherein each leaf EGSS 3-4 covers small areas and EGSS 3-3, 3-2 and 3-1 higher in hierarchy are responsible for larger parts of the service area. Each EGSS 3 can store a reference to the EGSS above it (except the root servers) and furthermore reference to the EGSS below it. This is similar to the organisation of the domain name system, except that the organisation is according to regional boundaries.

As it has been shown in fig. 1, a EGS database 16 can be provided. The EGSS can be included into a network of a service provider, so as to offer location-dependent services for the given geographical region. The EGSS 3 can contain the EGS database 16. This database 16 can contain different information:
1. Service descriptions:
   a description of single services, and
2. services templates, i.e. a template describing a preferred way to use a service or a set of services. For example, a service template for an instant message system can contain an ordered set of alternative front-ends that can be used for receiving instant messages.

The database 16 can be populated in different ways (or an arbitrary combination thereof):
- it can be created by the owner/administrator of the EGS server 3,
- the EGSS 3 can directly discover available services through a service discovery process, and/or
- services can be instructed so as to announce themselves to the EGS service.

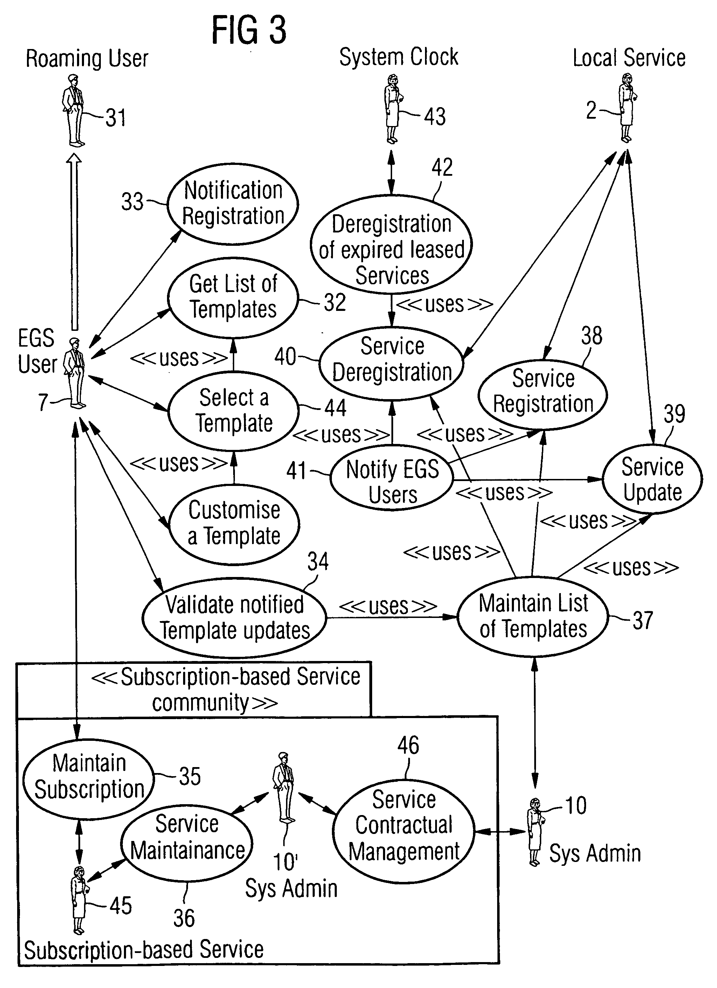

With reference to the use case diagram of fig. 3 it will now be described how different actors interact in the EGS system according to the present invention.

The actor roaming user 31 is a user roaming between different EGS cells. The actor EGS user 7 is an actor using the EGS service. He can take the action "get list of templates" 32 to retrieve all templates for a specific case. Furthermore, he can take the action "select a template" 44 to allow the EGSS 3 to select a template for the actor. If it takes the action "notification registration" 33 the actor EGS user 7 can register to receive notifications. If the EGS user 7 takes the action "validate notified template updates" 34 upon receiving a notification, the template is again validated.

The actor "subscription based service" is an actor representing one of the services of a set (thereinafter, a community) of subscription-based services, which the user 7 can subscribe to. The user 7 can take the action "maintain subscription" to maintain subscription to several services.

The actor "system administrator" 10' is an actor representing the system administrator of the subscription-based service 45. It can take the action "service maintenance" 36 representing the management activities of the system administrator 10'.

The actor system administrator of the EGS system 10 is the actor representing the system administrator 10 of an EGS service.

He can take the action "service contractual management" 46 which is the use case representing the contract between the EGS system administrator 10 and any subscription-based service 45. This can be either a contract between the two or just a pre-authorised lookup of the EGS system administrator 10 to retrieve the structure of the service template.

The system administrator of the EGS system 10 can take the action "maintain list of templates" 37 which is the use case representing the effort of the EGS system administrator 10 to maintain the list of service templates in the EGS 3.

The actor local service 2 is the actor representing a local service 2 registered with the EGSS. It can take the action "service registration" 38 which is the use case representing the activities to activate the service. This can be either a service discovery executed by the EGSS 3, a direct registration from the local service 2 or an indirect registration performed by the system administrator 10.

The action "service update" 39 is a use case representing the update of registration information of an existing service.

The action "service deregistration" 40 is a use case representing all the efforts to deactivate a service.

The action "notify EGS users" 41 is a use case representing all activities to notify the EGS users 7 about changes (38, 39, 40) in services or service templates (37).

The actor system clock 43 is an actor representing the continuous flow of time. It can take the action "deregistration of expired leased services" 42 which is the use case of all activities relating to the removal of service offers as soon as the leased time has expired.

In order to access the EGS, an EGS client (EGSC) 6 shall discover an EGSS 3. Therefore, each EGSS 3 shall announce itself to a service discovery infrastructure. Mobile devices 5 can use such an infrastructure for discovering the EGS server 3. Alternatively the EGS client 6 can perform the service discovery process itself.

A travelling user will use a mobile device 5 to access the local EGSS 3 for retrieving available service templates. To do so the mobile device 5 can act in various manners:
- Automatically scan for a new EGSS 3,
- wait until it has moved to another geographical region (outside of the current locked-in EGS coverage area - cell area), and/or
- perform the lookup on request of the user.

The scanning for a new EGSS 3 can also be performed constantly or periodically as a background process.

A mobile device 5 can access an EGS server 3 in different situations:
- Everytime the mobile device moves into the coverage area of a new EGS 3, the mobile device can automatically access a pre-defined set of service templates in order to ensure seamless working (handover) of services. In this case, once the mobile device 5 comes within the coverage area of a new EGSS 3, the mobile device 5 automatically asks templates for the service. To this extent, the EGS can advantageously be associated with Base Stations in mobile communication systems like e.g. GSM or UMTS.
- The EGSS 3 can be used as soon as the mobile device 5 requires a service that does not have available at hand. For example, it can start to look for a printing device whenever the user wants to print a document.
- A further alternative is a direct user interaction that orders the mobile device 5 to access the EGSS 3 and retrieve one or more services.

The mobile device 5 searches the local EGSS 3 using the service discovery functionality of an ad-hoc computing manager. The mobile device sends a description of the required service / service template to the EGS server 3. The EGS server 3 analyses the request and retrieves the required information from the database 16. Alternatively, the EGSS 3 can start to search the network for the required service 2. In this case the search shall be limited to a given period of time. If the EGSS 3 is not able to find the desired resource within such a time gap, the EGSS 3 can send a notification to the mobile device 5 indicating that the given request can not be satisfied at the moment. The user 7 can thus decide whether to repeat the action later or modify some of the parameters passed to the EGSS 3, so as to oblige the EGSS 3 to repeat the discovery process in an amended manner.

Whenever the EGS server 3 finds an appropriate service, it shall verify whether the service is available or not (check phase). Consequently, the EGSS 3 can verify whether the mobile device 5 is compatible or not with the service or service template (validation phase). If such tests are successfully passed, the EGSS 3 finally delivers the set of results to the EGS client 6.

In addition to the standard EGS use, the EGS client (EGSC) 6 can register for notifications about changes which might happen with respect to a service description or a service template. This relieves the EGSC 6 from monitoring the availability/validity of the services and/or templates.

As an further option the EGS can offer the possibility to personalise a given service. This will allow an EGSC 6 to store a configured and validated set of service descriptions and/or service templates in the EGS database 16. This information can be requested by the EGSC 6 upon re-entering the EGS coverage area (EGS cell 1) at a later time.

This option can be used in all cases where no system-based service is actually used (e.g. ad-hoc services). As an example, a roaming user may want to save the personalised and validated information concerning an ad-hoc network detected within a shopping mall, so that the user can quickly and without effort retrieve such information when she/he re-enters or gets into the proximity of the given shopping mall.

The EGS system handles the following information:
- EGS request:
   An EGS request describes what an EGS user 7 wants. It might contain several service lookups or service template lookups, notification subscription, personalised setting updates or personalised setting lookups.
- EGS reply:
   A data structure containing the response of the EGS to an EGS request. For each item contained in the associated EGS request, the EGS reply contains the appropriate response. For example, a service description is an appropriate response to a service lookup.
- Service lookup:
   A data structure describing a requested service. The service request might describe the service through service type, its interface type (service signature), selection criterions for defining undesired services, optimisation criterions for selecting best services, and/or a service selection policy.
- Service template lookup:
   A request describing a requested service template. The template can be denoted through the same/similar items as cited above for the EGS reply.
- Service description:
   A description of a single service in the EGS database 16. The service description can contain a service type, an interface type, service description attributes and service offer administration attributes. An example for a service description can be a print service. It defines the service type printer, the interface type, the attribute address and as an administrative attribute the lease time.
- Service templates:
   A template in the EGS database 16 describing a single service or a set of combined services that can be used by the EGS user 7. The user can access combined services through the virtual devices (EP 110 75 12 A1), whose configuration can be automatically pre-determined by the EGSS itself through its ACM sub-unit 22, and stored as a template itself on the EGS database 16. The EGS database 16 is structured in a general purpose manner, so as to provide EGS interoperability with any third-party service. It can be advantageous in the use of for example an instant messaging brokering system which is known e.g. from EP 99 124 149.8. Proper mapping functions shall therefore be used by each EGSC 6, so as to convert the EGS information into the native format of the system where different front ends can be used to receive copies of an instant message. The service template describes in such a case the available front ends and a priority list among them.
- EGS notification subscription update:
   A request describing a notification update. This can be a new notification subscription that describes the condition when a device wants to be informed about changes in a service or in a service template. It can be a change to an older description or it might be the removal of an existing subscription.
- EGS notifications:
   The notification issued to inform the user about changes in service description and/or service templates.
- EGS personalization settings:
   A data set that describes the personal settings a user may wish to access when entering within coverage area of a given EGSS 3 at a later time. The personal settings can contain different settings for different devices. For example, the personalised setting can contain the configured service template where a user has removed specific unwanted front ends. Another option can be to store notification subscription in the personalised settings and to renew the subscription automatically.
- EGS personalised setting update:
   A request for updating EGS personalised settings in the EGS database 16.
- EGS personalised setting lookup:
   A request for delivering EGS personalised settings.
- User identifier:
   A data set that identifies the user.
- EGSC identifier:
   A data item that identifies the EGSC 6.
- EGSS identifier:
   A data item identifying the EGSS 3.
- EGSC description:
   A set of properties describing the EGSC 6.

The mobile device 5 uses a EGSC API (Application Programming Interface) unit 47 to access the EGS client 6. The EGS client 6 uses a EGS discovery unit 48 in order to find the address of the local EGS server unit 3. The EGSC 6 then uses the EGSC access channel to communicate with the EGS server 3. Whenever the EGS client unit 6 and the EGS server 3 are on different services, the EGS channel uses the EGS access protocol to communicate with the EGS server 3.

In a request-reply style protocol, the client 6 can issue the following requests:
- Lookup:
   The lookup request will present a set of service requests or service template requests to the EGSS 3. The EGSS 3 will resolve the requests and return a set of answers.
- Notification subscription:
   The request contains the notification subscription request. The reply contains an identifier for the stored notification subscription requests. It might be advantageous to treat a notification as a lease. In this case, the notification subscription will contain administrative data like the validity period of the lease.
- Notification subscription removal:
   With this request the EGS user 7 can remove a notification subscription.
- Storage of personalised settings:
   The request contains a set of personalised settings. These settings are stored.
- Retrieval of personalised settings:
   This request retrieves personalised settings for a user. It is of advantage to authenticate the user.

The EGSS 3 uses the EGS notification protocol for informing the user about changes. The EGS notification protocol contains one service primitive, the "EGS Notification" to notify about changes of a service or service template.

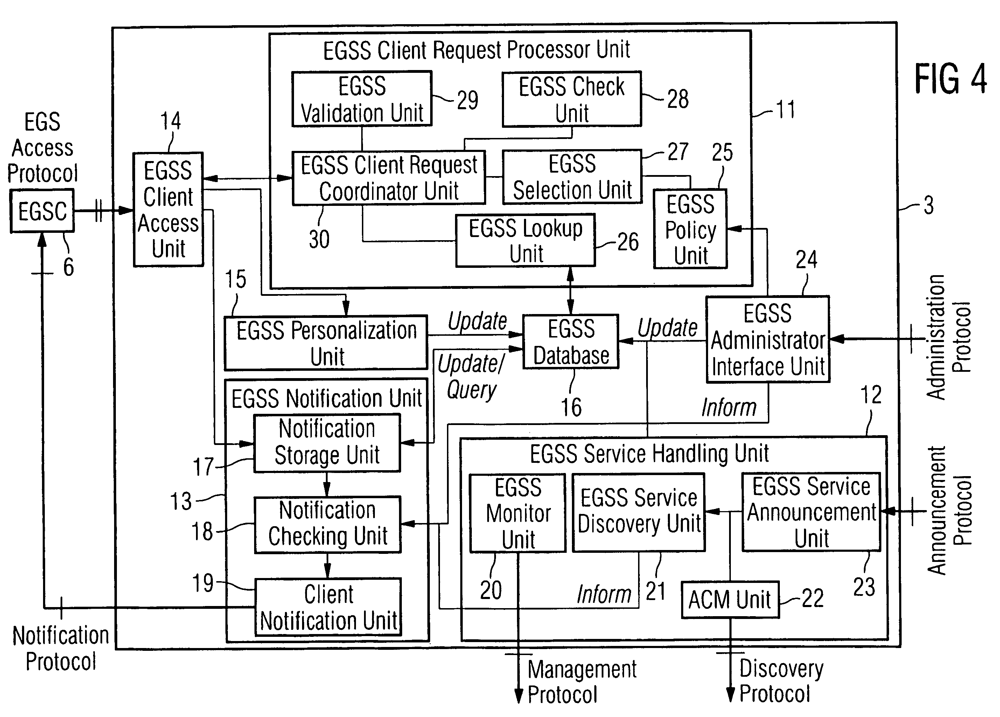

With reference to fig. 4 now the handling of a EGS request will be explained. In fig. 4 particularly the internal structure of the EGSS 3 is shown. Each request is received by the EGSS client access unit 14. It can be of advantage to authenticate the user and to determine her/his authorisation status. The EGSS client access unit 14 then forwards the request to either the EGSS request processing unit 11, the EGSS notification unit 13 or the EGSS personalization units 15.

The EGSS request processing unit 11 comprises a EGSS client request co-ordinator unit 30 dispatching a single request to other sub units of the EGSS request processing unit 11. The EGGS lookup unit 26 will check the EGSS database unit 16 for available services or templates. Then the EGSS selection unit 27 selects suitable services or service templates according to the criterions in the request and according to the administrative policies (e.g. for premium customers). The EGSS check unit 28 then verifies that the selected service/service template is available. If required, it is then checked that the template is valid through the EGSS validation unit 29.

The EGSS notification unit 13 receives Notification Subscription Requests. The requests are forwarded to the notification storage unit 17. This unit stores the request in the EGSS database. If required the EGGS notification storage unit 17 can set up an internal fast access path for checking the notification subscriptions. The notification checking unit 18 receives Inform signals either from the EGSS administration interface unit 24 (e.g. upon entering a new service / service template) or from the EGSS service discovery unit 21 (e.g. whenever a new service is discovered or changes to a template are noticed). Then it checks the notification subscription. Whenever necessary, the client notification unit 19 sends out notifications to EGS users.

The EGSS personalization unit 25 processes any personalization request and manipulates the EGSS database 16 to this end.

The EGSS service handling unit 12 monitors the available services (EGSS monitor unit 20), checks for new services (EGSS service discovery unit 21) using an ACM (Ad-Hoc Computing Manager) unit 22 or waits for service announcements (EGSS service announcement unit 23).

In the following the sub units will be explained in detail.

The EGSS client access unit 14 receives a client request and dispatches it to other units of the EGSS 3. In addition, the unit might be responsible for co-ordinating parallel activities (e.g. multiple requests) and for checking authentication and authorisation status of the EGSC 6.

The EGSS client request processing unit 11 is responsible for handling all lookup requests.

The EGSS client request co-ordinator unit 30 is part of the EGSS client request processing unit 11 and co-ordinates the internal processing of a Request. If the original request contains several Service Requests/Service Template Requests, the EGSS client request co-ordinator unit 30 co-ordinates the execution of all requests.

EGSS lookup unit 26: This unit performs a database lookup according to the parameter in a Service Request/Service Template Request.

The EGSS selection unit 27 selects among several available services/service templates according to parameters stated in the original request or to some internal policies.

The EGSS check unit 28 checks the availability of services or parts of the service templates.

The EGSS validation unit 29 checks the validity of a service template by checking the parameters given in the original request and the setting of some internal policies.

The EGSS policy unit 25 manages the setting of EGSS policies.

The EGS database 16 stores EGSS data.

The EGSS administration interface unit 24 allows an administrator to manage the EGSS 3. This includes (among others) insertion of new services, the setting of policy parameters and others.

The EGSS personalisation unit 15 manages updates a lookup requests for personalised settings.

The EGSS notification unit 13 manages notifications.

The notification storage unit 17 thereby handles the adding and removal of notification subscriptions to the EGSS database 16.

The notification checking unit 18 checks for conditions when a notification must be sent out. To this end it receives Inform signals from other units.

The client notification unit 19 handles the communications aspects of sending notifications to the EGSC 6.

The EGSS service handling unit 12 handles the interaction of the EGSS unit 3 with the local services 2.

The EGSS monitor unit 20 is an optional part of the EGSS service handling unit 12 and monitors the availability of known services.

The EGSS service discovery unit 21 manages the discovery of new services and uses an ACM unit 22. The ACM unit 22 is a standard "ad-hoc computing" unit.

The EGSS service announcement unit 23 is an optional unit, which allows services to announce themselves directly to a EGSS 3.

The idea of the EGSS service is provide direct support for roaming mobile devices in order to access local services. The most important advantages over the prior art are:
- provide special lookup services for local services,
- provide service templates (pre-configured descriptions on how to use the local services),
- provide management facilities to monitor the local services and verify the availability,
- verify the validity of service templates,
- allow to subscribe for notifications,
- allow to store personalised settings in the EGSS 3 that can be retrieved upon re-entering a cell,
- support for virtual devices.

A typical application scenario is a supermarket, which as a service to its customers can provide EGSS 3 for all those customers equipped with a wireless PDA (Personal Digital Assistant). The EGSS 3 can provide access services like:
- path finder to certain products,
- audible/visual notification of special offers in its vicinity that are of personal interest to the user,
- information services describing offered products (e.g. streaming videos, datasheets, etc.), and
- re-ordering services (e.g. if a product is out of stock).

To summarize, the purpose of the EGS is to support mobile devices in the discovery process of local services. It optimises the discovery process and performs the discovery process for the mobile devices. In such a way the usage of communication and computation resources can be reduced. This leads indirectly to the saving of battery and therefore to a longer operation of the device.

Furthermore, the EGS provides pre-configured service usage templates, thus reducing the overhead to configure the provided information to the user's needs. Such templates can even contain information concerning virtual devices thus leading to a further configuration overhead reduction. Therefore, the EGS system is a part of a general ad-hoc computing system allowing (mobile) users to access local resources in an optimised manner.

An application example is the Instant Messaging Technology, which is f.e. disclosed in EP 110 75 12 A1.

## Claims

1. A method performed in a mobile device(5) to discover and use local services(2) offered in a coverage area (1) of a wired or wireless communication system served by an Entry Gateway Server (3),
the method comprising the following steps:
- sending a description of a required service (2) from the mobile device (5) to the Entry Gateway Server (3) when entering the coverage area (1),
- pre-configuring a service template describing a way of using the required service (2) by the Entry Gateway Server (3),
- delivering the service template from the Entry Gateway Server (3) to the mobile device (5), and
- accessing and using the required service (2) by the mobile device (5) in a way as specified in the received service template,
**characterized by** the steps of
- customizing the service template by the user (7) of the mobile device (5),
- storing the customized service template in a database (16) of the Entry Gateway Server (3), and
- delivering the customized service template from the Entry Gateway Server (3) to the mobile device (5) when the mobile device re-enters the coverage area (1).

2. Method according to claim 1,
**characterised in that**
the Entry Gateway Server (3) checks the availability of services (2) and whether resources for those services (2) are already reserved for other tasks before offering them to the wired and/or wireless mobile device (5).

3. Method according to anyone of the preceding claims,
**characterised in that**
the Entry Gateway Server (3) validates whether a service template matches the requirements of the mobile device (5) before delivering the service template to the mobile device (5).

4. Method according to anyone of the preceding claims,
**characterised in that**
the Entry Gateway Server (3) continuously or periodically monitors the current state of local services (2) in its surroundings.

5. Method according to anyone of the preceding claims,
**characterised in that**
users (7) of mobile devices (5) can store personal settings (15) for the location of an entry gateway server (3) hosting a service (2).

6. Method according to anyone of the preceding claims,
**characterised in that**
on request of a user (7) of a mobile device (5) the Entry Gateway Server (3) accesses a database (16) containing information on local services (2).

7. Method according to claim 6,
**characterised in that**
the database (16) contains information on single services (2), and/or service templates describing a way of using one or a set of services (2).

8. Method according to anyone of claims 1 to 6,
**characterised in that**
on request of a user (7) of a mobile device (5) the Entry Gateway Server (3) scans the network (1) for the requested local service (2).

9. Method according to anyone of the preceding claims,
**characterised in that**
mobile devices (5) scan automatically for new Entry Gateway Servers (3) in their surroundings.

10. Method according to anyone of claims 1 to 9,
**characterised in that**
mobile devices (5) scan automatically for new Entry Gateway Servers (3) after each geographical or logical (i.e. context-related) change.

11. Method according to anyone of claims 1 to 10,
**characterised in that**
mobile devices (5) scan for new Entry Gateway Servers (3) on request of their users (7).

12. Computer software program product,
**characterised in that**
it implements a method according to anyone of claims 1 to 8 when run on a server (3) of a computer network.

13. Computer software program product,
**characterised in that**
it implements a method according to anyone of claims 9 to 11 when run on a mobile device (5).

14. A system for a mobile device (5) to discover and use local services (2) offered in a coverage area (1) of a wired or wireless communication system served by an Entry Gateway Server (3),
the system comprising:
- the Entry Gateway Server (3) for pre-configuring a service template describing a way of using the required service (2), and
for delivering the service template to the mobile device (5), and
- the mobile device (5) for sending a description of a required service (2) to the Entry Gateway Server (3) when entering the coverage area (1), and
for accessing and using the required service (2) in a way as specified in the received service template,
**characterized by**
- means for the user (7) of the mobile device(5) to customize the service template, and
- the Entry Gateway Server (3) comprising a database (16) for storing the customized service template and means for delivering the customized service template to the mobile device (5) when the mobile device re-enters the coverage area (1).

15. A system according to claim 14,
**characterised in that**
the entry gateway server (3) is designed to check the availability of services (2) and whether resources for those services are already reserved for other tasks before offering them to the wired and/or wireless mobile device (5).

16. A system according to anyone of claims 14 to 15,
**characterised in that**
the Entry Gateway Server (3) is designed to validate whether a service template matches the requirements of the mobile device (5) before delivering the service template to the mobile device (5).

17. A system according to anyone of claims 14 to 16,
**characterised in that**
the Entry Gateway Server (3) is designed to continuously or periodically monitor the current state of local services (2) in its surroundings.

18. A system according to anyone of claims 14 to 17,
**characterised by**
a plurality of entry gateway servers (3) offering information on local service (2) of a network (1) in their surroundings to wireless mobile devices (5) connecting thereto,
wherein the entry gateway servers (3) are organised in a hierarchy (3-1, 3-2, 3-3, 3-4), wherein lower level entry gateway servers (3-4) cover a small (geographical or logical) area and higher level entry gateway servers (3-1) cover a larger (geographical or logical) area.

19. A system according to claim 18,
**characterised in that**
each entry gateway server (3) but the server on the top level references to the server immediately above it in the hierarchy and to the server immediately below it in the hierarchy.

## Patentansprüche

1. Verfahren, welches in einem mobilen Gerät (5) ausgeführt wird, um lokale Dienste (2) ausfindig zu machen und zu nutzen, die in einem Erfassungsbereich (1) eines drahtgebundenen oder drahtlosen Kommunikationssystems angeboten werden, welches durch einen Zugangs-Gateway-Server (3) bedient wird, umfassend die folgenden Verfahrensschritte:
- Senden einer Beschreibung eines benötigten Dienstes (2) von dem mobilen Gerät (5) zu dem Zugangs-Gateway-Server (3), wenn es in den Erfassungsbereich (1) eintritt,
- Vor-Konfigurieren einer Dienst-Vorlage bzw. -Schablone, welche eine Art und Weise der Nutzung des benötigten Dienstes (2) durch den Zugangs-Gateway-Server (3) beschreibt,
- Abgabe der Dienst-Schablone von dem Zugangs-Gateway-Server (3) an das mobile Gerät (5) und
- Zugreifen und Nutzen des benötigten Dienstes (2) durch das mobile Gerät (5) in einer Art und Weise, wie sie in der empfangenen Dienst-Schablone spezifiziert ist,
**gekennzeichnet durch** die Schritte:
- kundenspezifisches Gestalten der Dienst-Schablone **durch** den Benutzer (7) des mobilen Geräts (5)
- Speichern der kundenspezifisch gestalteten Dienst-Schablone in einer Datenbank (16) des Zugangs-Gateway-Servers (3) und
- Abgeben der kundenspezifisch gestalteten Dienst-Schablone von dem Zugangs-Gateway-Server (3) an das mobile Gerät (5), wenn das mobile Gerät wieder in den Erfassungsbereich (1) eintritt.

2. Verfahren nach Anspruch 1, **dadurch gekennzeichnet, dass** der Zugangs-Gateway-Server (3) die Verfügbarkeit von Diensten (2) überprüft und feststellt, ob Ressourcen für jene Dienste (2) bereits für andere Aufträge reserviert sind, bevor sie dem drahtgebundenen und/oder drahtlosen mobilen Gerät (5) angeboten werden.

3. Verfahren nach einem der vorhergehenden Ansprüche, **dadurch gekennzeichnet, dass** der Zugangs-Gateway-Server (3) bestätigt, ob eine Dienst-Schablone den Anforderungen des mobilen Geräts (5) entspricht, bevor die Dienst-Schablone an das mobile Gerät (5) abgegeben wird.

4. Verfahren nach einem der vorhergehenden Ansprüche, **dadurch gekennzeichnet, dass** der Zugangs-Gateway-Server (3) kontinuierlich oder periodisch den aktuellen Zustand von lokalen Diensten (2) in seiner Umgebung überwacht.

5. Verfahren nach einem der vorhergehenden Ansprüche, **dadurch gekennzeichnet, dass** Benutzer (7) von mobilen Geräten (5) persönliche Einstellungen (15) für den Ort eines einen Dienst (2) anbietenden Zugangs-Gateway-Servers (3) speichern können.

6. Verfahren nach einem der vorhergehenden Ansprüche **dadurch gekennzeichnet, dass** auf eine Anforderung durch einen Benutzer (7) eines mobilen Geräts (5) hin der Zugangs-Gateway-Server (3) auf eine Datenbank (16) zugreift, die Informationen bezüglich lokaler Dienste (2) enthält.

7. Verfahren nach Anspruch 6, **dadurch gekennzeichnet, dass** die Datenbank (16) Informationen über Einzeldienste (2) und/oder Dienst-Schablonen enthält, welche eine Art und Weise zur Nutzung eines Dienstes oder eines Satzes von Diensten (2) beschreiben.

8. Verfahren nach einem der Ansprüche 1 bis 6, **dadurch gekennzeichnet, dass** auf eine Anforderung durch einen Benutzer (7) eines mobilen Gerätes (5) hin der Zugangs-Gateway-Server (3) das Netzwerk (1) nach dem angeforderten lokalen Dienst (2) absucht.

9. Verfahren nach einem der vorhergehenden Ansprüche, **dadurch gekennzeichnet, dass** mobile Geräte (5) ihre Umgebung nach neuen Zugangs-Gateway-Servern (3) automatisch absuchen.

10. Verfahren nach einem der Ansprüche 1 bis 9, **dadurch gekennzeichnet, dass** mobile Geräte (5) nach jeder geografischen oder logischen (das heißt Kontext-bezogenen) Änderung eine automatische Suche nach neuen Zugangs-Gateway-Servern (3) vornehmen.

11. Verfahren nach einem der Ansprüche 1 bis 10, **dadurch gekennzeichnet, dass** mobile Geräte (5) auf Anforderung von ihren Benutzern (7) hin eine Suche nach neuen Zugangs-Gateway-Servern (3) vornehmen.

12. Computersoftwareprogrammprodukt, **dadurch gekennzeichnet, dass** es ein Verfahren nach einem der Ansprüche 1 bis 8 realisiert, wenn es auf einem Server (3) eines Computernetzwerks läuft.

13. Computersoftwareprogrammprodukt, **dadurch gekennzeichnet, dass** es ein Verfahren nach einem der Ansprüche 9 bis 11 realisiert, wenn es in einem mobilen Gerät (5) abläuft.

14. System für ein mobiles Gerät (5) zum Auffinden und Nutzen von lokalen Diensten (2), die in einem Erfassungsbereich (1) eines drahtgebundenen oder drahtlosen Kommunikationssystems angeboten werden, welches durch einen Zugangs-Gateway-Server (3) bedient wird, umfassend:
- den Zugangs-Gateway-Server (3) für eine Vor-Konfiguration einer Dienst-Schablone, die eine Art und Weise der Nutzung eines benötigten Dienstes (2) beschreibt, und zur Abgabe der Dienst-Schablone an das mobile Gerät (5) und
- das mobile Gerät (5) zum Senden einer Beschreibung eines benötigten Dienstes (2) zu dem Zugangs-Gateway-Server (3), wenn es in den Erfassungsbereich (1) eintritt, und für einen Zugriff auf den benötigten Dienst (2) und für dessen Nutzung in einer Art und Weise, wie sie in der empfangenen Dienst-Schablone spezifiziert ist,
**gekennzeichnet durch**
- Einrichtungen bzw. Mittel für den Benutzer (7) des mobilen Geräts (5), die Dienst-Schablone kundenspezifisch zu gestalten, und
- den Zugangs-Gateway-Server (3), der eine Datenbank (16) zur Speicherung der kundenspezifisch gestalteten Dienst-Schablone und Einrichtungen bzw. Mittel zur Abgabe der kundenspezifisch gestalteten Dienst-Schablone an das mobile Gerät (5) umfasst, wenn das mobile Gerät in den Erfassungsbereich (1) wieder eintritt.

15. System nach Anspruch 14, **dadurch gekennzeichnet, dass** der Zugangs-Gateway-Server (3) so ausgelegt ist, dass er die Verfügbarkeit von Diensten (2) überprüft und feststellt, ob Ressourcen für jene Dienste bereits für andere Aufträge reserviert sind, bevor die betreffenden Dienste dem drahtgebundenen und/oder drahtlosen mobilen Gerät (5) angeboten werden.

16. System nach Anspruch 14 oder 15, **dadurch gekennzeichnet, dass** der Zugangs-Gateway-Server (3) so ausgelegt ist, dass er bestätigt, ob eine Dienst-Schablone den Anforderungen des mobilen Geräts (5) entspricht, bevor die Dienst-Schablone an das mobile Gerät (5) abgegeben wird.

17. System nach einem der Ansprüche 14 bis 16, **dadurch gekennzeichnet, dass** der Zugangs-Gateway-Server (3) so ausgelegt ist, dass er kontinuierlich oder periodisch den aktuellen Zustand von lokalen Diensten (2) in seiner Umgebung überwacht.

18. System nach einem der Ansprüche 14 bis 17, **dadurch gekennzeichnet, dass** eine Vielzahl von Zugangs-Gateway-Servern (3) Informationen bezüglich eines lokalen Dienstes (2) eines Netzwerks (1) in ihren Umgebungen für mit diesem verbundene drahtlose mobile Geräte (5) anbietet,
wobei die Zugangs-Gateway-Server (3) in einer Hierarchie (3-1, 3-2, 3-3, 3-4) organisiert sind, in der Zugangs-Gateway-Server (3-4) unterer Ebenen einen kleineren (geografischen oder logischen) Bereich und Zugangs-Gateway-Server (3-1) höherer Ebenen einen größeren (geografischen oder logischen) Bereich abdecken.

19. System nach Anspruch 18, **dadurch gekennzeichnet, dass** jeder Zugangs-Gateway-Server (3) mit Ausnahme des Servers in der obersten Ebene auf den Server unmittelbar über ihm in der Hierarchie und auf den Server unmittelbar unter ihm in der Hierarchie Bezug nimmt.

## Revendications

1. Procédé réalisé dans un dispositif mobile (5) pour découvrir et utiliser des services locaux (2) offerts dans une zone de couverture (1) d'un système de communication filaire ou sans fil servi par un serveur de passerelle d'entrée (3),
le procédé comprenant les étapes suivantes :
- envoi d'une description à un dispositif requis (2) à partir du dispositif mobile (5) à un serveur de passerelle d'entrée (3) lors de l'entrée dans la zone de couverture (1),
- préconfiguration du modèle de service décrivant un moyen d'utiliser le service requis (2) par un serveur de passerelle d'entrée (3),
- fourniture d'un modèle de service par le serveur de passerelle d'entrée (3) au dispositif mobile (5), et
- accès et utilisation du service requis (2) par un dispositif mobile (5) d'une manière comme cela est spécifié dans le modèle de service reçu,
**caractérisé par** les étapes de :
- personnalisation du modèle de service par l'utilisateur (7) du dispositif de mobile (5),
- stockage du modèle de service personnalisé dans une base de données (16) du serveur de passerelle d'entrée (3), et
- fourniture du modèle de service personnalisé à partir du serveur de passerelle d'entrée (3) au dispositif mobile (5) lorsque le dispositif mobile repénètre dans la zone de couverture (1).

2. Procédé selon la revendication 1,
**caractérisé en ce que**
le serveur de passerelle d'entrée (3) contrôle la disponibilité des services (2) et si des ressources pour ces services (2) sont déjà réservées pour d'autres tâches avant de les offrir au dispositif mobile filaire et/ou sans fil (5).

3. Procédé selon l'une quelconque des revendications précédentes,
**caractérisé en ce que**
le serveur de passerelle d'entrée (3) valide si un modèle de service correspond aux exigences du dispositif mobile (5) avant de fournir le modèle de service au dispositif de mobile (5).

4. Procédé selon l'une quelconque des revendications précédentes,
**caractérisé en ce que**
le serveur de passerelle d'entrée (3) contrôle continuellement ou périodiquement l'état actuel des services locaux (2) dans ses environnements.

5. Procédé selon l'une quelconque des revendications précédentes,
**caractérisé en ce que**
des utilisateurs (7) des dispositifs mobiles (5) peuvent stocker des réglages personnels (15) pour l'emplacement d'un serveur de passerelle d'entrée (3) hébergeant un service (2).

6. Procédé selon l'une quelconque des revendications précédentes,
**caractérisé en ce que**
à la demande d'un utilisateur (7) d'un dispositif mobile (5) le serveur de passerelle d'entrée (3) accède à une base de données (16) contenant des informations sur des services locaux (2).

7. Procédé selon la revendication 6,
**caractérisé en ce que**
la base de donnes (16) contient des informations sur des services uniques (2), et/ou des modèles de service décrivant une manière d'utiliser un ou un ensemble de services (2).

8. Procédé selon l'une quelconque des revendications 1 à 6,
**caractérisé en ce que**
à la demande d'un utilisateur (7) d'un dispositif mobile (5) le serveur de passerelle d'entrée (3) balaie le réseau (1) pour le service local demandé (2).

9. Procédé selon l'une quelconque des revendications précédentes,
**caractérisé en ce que**
des dispositifs mobiles (5) balaient automatiquement de nouveaux serveurs de passerelle d'entrée (3) dans leurs environnements.

10. Procédé selon l'une quelconque des revendications 1 à 9,
**caractérisé en ce que**
des dispositifs mobiles (5) balaient automatiquement de nouveaux serveurs de passerelle d'entrée (3) après chaque changement géographique ou logique (c'est-à-dire lié au contexte).

11. Procédé selon l'une quelconque des revendications 1 à 10,
**caractérisé en ce que**
des dispositifs mobiles (5) balaient de nouveaux serveurs passerelle d'entrée (3) à la demande de leurs utilisateurs (7).

12. Produit de programme logiciel d'ordinateur,
**caractérisé en ce que**
il implémente un procédé selon l'une quelconque des revendications 1 à 8 lorsqu'il fonctionne sur un serveur (3) d'un réseau d'ordinateur.

13. Produit de programme logiciel d'ordinateur,
**caractérisé en ce que**
il implémente un procédé selon l'une quelconque des revendications 9 à 11 lorsqu'il fonctionne sur un dispositif mobile (5).

14. Système pour un dispositif mobile (5) pour découvrir et utiliser des services locaux (2) offerts dans une zone de couverture (1) d'un système de communication filaire ou sans fil servi par un serveur de passerelle d'entrée (3),
le système comprenant :
- le serveur de passerelle d'entrée (3) pour préconfigurer un modèle de service décrivant une manière d'utiliser le service requis (2), et
pour délivrer le modèle de service au dispositif de mobile (5), et
- le dispositif de mobile (5) pour envoyer une description du service requis (2) au serveur de passerelle d'entrée (3) lors de l'entrée dans la zone de couverture (1), et
pour accéder et utiliser le service requis (2) d'une manière comme cela est spécifié dans le modèle de service reçu,
**caractérisé par**
- un moyen pour l'utilisateur (7) du dispositif mobile (5) de personnaliser le modèle de service, et
- le serveur de passerelle d'entrée (3) comprenant une base de données (16) pour stocker le modèle de service personnalisé et un moyen pour délivrer le modèle de service personnalisé au dispositif mobile (5) lorsque le dispositif mobile repénètre dans la zone de couverture (1).

15. Système selon la revendication 14,
**caractérisé en ce que**
le serveur de passerelle d'entrée (3) est conçu pour contrôler la disponibilité des services (2) et si des ressources pour ces services sont déjà réservées pour d'autres tâches avant de les offrir au dispositif de mobile filaire et/ou sans fil (5).

16. Système selon l'une quelconque des revendications 14 à 15,
**caractérisé en ce que**
le serveur de passerelle d'entrée (3) est conçu pour valider si un modèle de service correspond aux exigences du dispositif de mobile (5) avant de fournir le modèle de service au dispositif de mobile (5).

17. Système selon l'une quelconque des revendications 14 à 16,
**caractérisé en ce que**
le serveur de passerelle d'entrée (3) est conçu pour surveiller continuellement ou périodiquement l'état actuel des services locaux (2) dans ses environnements.

18. Système selon l'une quelconque des revendications 14 à 17,
**caractérisé par**
une pluralité de serveurs de passerelle d'entrée (3) offrant des informations sur le service local (2) d'un réseau (1) dans leurs environnements aux dispositifs mobiles sans fil (5) s'y reliant,
dans lequel les serveurs de passerelle d'entrée (3) sont organisés dans une hiérarchie (3-1, 3-2, 3-3, 3-4), dans laquelle les serveurs de passerelle d'entrée de niveau inférieur (3-4) couvrent une petite zone (géographique ou logique) et des serveurs de passerelle d'entrée de niveau plus élevé (3-1) couvrent une zone plus large (géographique ou logique).

19. Système selon la revendication 18,
**caractérisé en ce que**
chaque serveur de passerelle d'entrée (3) sauf le serveur au niveau supérieur fait référence au serveur immédiatement au-dessus de lui dans la hiérarchie et au serveur immédiatement en dessous de lui dans la hiérarchie.
